(19) **Europäisches Patentamt / European Patent Office / Office européen des brevets**

(11) **EP 4 264 378 B1**

(12) **FASCICULE DE BREVET EUROPEEN**

(45) Date de publication et mention de la délivrance du brevet:
**06.11.2024 Bulletin 2024/45**

(21) Numéro de dépôt: **21840494.5**

(22) Date de dépôt: **15.12.2021**

(51) Classification Internationale des Brevets (IPC):
*G04B 17/06* (2006.01)    *G04D 7/08* (2006.01)
*G04D 3/00* (2006.01)    *C09D 11/00* (2014.01)

(52) Classification Coopérative des Brevets (CPC):
**G04D 7/088; C09D 11/00; G04B 17/063; G04D 3/0069**

(86) Numéro de dépôt international:
**PCT/EP2021/085992**

(87) Numéro de publication internationale:
**WO 2022/129229 (23.06.2022 Gazette 2022/25)**

(54) **PROCEDE D'IMPRESSION D'UN ELEMENT FONCTIONNEL SUR UN COMPOSANT HORLOGER**

VERFAHREN ZUM AUFDRUCKEN EINES FUNKTIONELLEN ELEMENTS AUF EINE UHRKOMPONENTE

METHOD FOR PRINTING A FUNCTIONAL ELEMENT ON A TIMEPIECE COMPONENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.12.2020 EP 20215110**

(43) Date de publication de la demande:
**25.10.2023 Bulletin 2023/43**

(73) Titulaire: **CSEM Centre Suisse d'Electronique et de Microtechnique SA - Recherche et Développement**
**2002 Neuchâtel (CH)**

(72) Inventeurs:
• **LANI, Sébastien**
  **3210 Kerzers (CH)**
• **PUGIN, Raphael**
  **2013 Colombier (CH)**
• **HENDRICKS, Nicholas Raymond**
  **8005 Zürich (CH)**

(74) Mandataire: **ICB SA**
  **Faubourg de l'Hôpital, 3**
  **2001 Neuchâtel (CH)**

(56) Documents cités:
EP-A1- 2 746 243    EP-A1- 3 078 436
EP-A1- 3 273 312    WO-A1-2016/203063
CH-A2- 715 513    CN-A- 111 077 757
JP-A- 2008 151 616    JP-A- 2008 164 529
JP-A- H09 127 261    US-A1- 2014 035 995

EP 4 264 378 B1

**Description**

Domaine technique et état de l'art

L'invention se rapporte à un procédé d'impression d'un élément fonctionnel sur une surface d'une zone réceptrice d'un composant horloger d'une pièce d'horlogerie ainsi qu'à un tel composant horloger et à cette pièce d'horlogerie.

Arrière-plan de l'invention

On connaît différents procédés de l'état de la technique prévoyant l'application de matière sur un composant d'une pièce d'horlogerie en particulier lorsque ces procédés sont destinés à participer au réglage de la marche d'un mouvement horloger par l'ajustement de l'inertie d'un composant comme un balancier d'un résonateur balancier-spiral d'un tel mouvement, voir par exemple la demande de brevet WO 2016/203063 A1.

Dans ce contexte, ces procédés prévoient classiquement dans un premier temps la détermination d'une valeur de correction à appliquer à l'inertie du balancier pour obtenir une marche souhaitée de ce mouvement, ladite valeur étant déterminée à partir de l'établissement d'une mesure de la marche du mouvement de la pièce d'horlogerie. Et dans un deuxième temps, ils prévoient la mise en oeuvre d'un ajout de matière par projection de cette matière sur le balancier afin d'ajuster l'inertie de ce balancier selon la valeur de correction déterminée.

Toutefois un des inconvénients majeurs de tels procédés est lié au fait qu'un tel ajout de matière par projection engendre souvent des éclaboussures, résultant notamment de l'impact de cette matière sur le balancier, lesdites éclaboussures étant susceptibles de se répandre et contaminer le mouvement horloger et provoquer ainsi un dysfonctionnement de ce mouvement.

Résumé de l'invention

Un but de l'invention est par conséquent de proposer un procédé qui permet d'appliquer de manière précise et ciblée un élément fonctionnel sur une zone réceptrice définie d'un composant horloger, le composant pouvant dans un exemple être un balancier.

Un autre but de l'invention est d'offrir ainsi la possibilité de pouvoir réaliser un réglage d'une pièce d'horlogerie comportant un résonateur équipé d'un tel balancier.

Un autre but de l'invention est d'imprimer un élément fonctionnel constitué d'une quantité contrôlée de matériau sur la zone réceptrice du composant horloger.

Dans ce dessein, l'invention concerne un procédé d'impression selon la revendication 1 annexée.

Dans d'autres modes de réalisation :

- l'étape de préparation comprend une sous-étape de composition d'un mélange relatif à ladite solution en fonction des propriétés spécifiques définies de cette solution, ladite sous-étape comprenant une phase de réalisation d'une préparation de base comprenant ledit matériau et un liquide de base notamment un solvant ;

- la sous-étape de composition comporte une phase de sélection d'au moins un produit à ajouter dans ladite préparation de base, ledit au moins produits étant choisis parmi des additifs de correction de la tension superficielle tels que des agents mouillants ;

- la sous-étape de composition comporte une phase de sélection d'au moins un produit à ajouter dans ladite préparation de base, ledit au moins produits étant choisis parmi des agents dispersants contribuant à la stabilité de la dispersion de particules du matériau solide ;

- l'étape de préparation de la solution comprend une sous-étape de mélange d'au moins un produit sélectionné avec la préparation de base ;

- l'étape de dépôt comprend une sous-étape d'application de la solution préparée sur toute la surface de la zone réceptrice ;

- la sous-étape d'application est réalisée selon une technologie d'impression du type « jet d'aérosol », « high density ink jet », « dosage pneumatique », « dosage par extrusion » ou encore « super ink jet » ;

- la sous-étape d'application comprend une phase de transformation de la solution préparée en un aérosol lorsque la technologie d'impression est par jet d'aérosol ;

- l'étape de dépôt comprend une sous-étape de solidification du matériau de la solution appliqué sur la surface de la zone réceptrice ;

- la sous-étape de solidification débute en même temps ou sensiblement en même temps que la sous-étape d'application et s'achève après la réalisation de cette sous-étape d'application ;

- les propriétés spécifiques de la sous-étape de définition sont aussi relatives à une densité de ladite solution ;

- le matériau comprend au moins un précurseur moléculaire ou au moins une particule telle qu'une particule métallique ou d'oxyde métallique, une particule monocristalline ou polycristalline, une particule de matière amorphe, une particule de céramique, une particule d'un polymère, une particule pigmentée/colorée, une particule incolore, une particule translucide/transparente, une particule fluorescente ou encore une particule phosphorescente ;

- le matériau comprend au moins une particule du type nanoparticule ou microparticule ;

- l'élément fonctionnel appliquée sur la surface de la zone réceptrice du composant horloger de la pièce d'horlogerie comprend un élément décoratif/esthétique, un élément de réglage du fonctionnement d'un composant horloger tel qu'une masse inertielle ou un élément d'interfaçage ;

- le procédé comprend une étape de réitération de l'étape de dépôt ;
- le procédé est un procédé d'impression, notamment par jet d'aérosol, d'un élément fonctionnel sur la surface d'une zone réceptrice du composant de la pièce d'horlogerie contribuant au réglage de la marche de cette pièce d'horlogerie notamment par la modification de l'inertie et/ou du balourd de ce composant.

Description sommaire des dessins

D'autres particularités et avantages ressortiront clairement de la description qui en est faite ci-après, à titre indicatif et nullement limitatif, en référence aux figures annexées, dans lesquelles :

- les figures 1 et 2 représentent chacune une vue de dessus de deux variantes d'un composant horloger par exemple ici un balancier comportant des zones réceptrices destinées à recevoir chacune un élément fonctionnel, selon un mode de réalisation de l'invention ;
- les figures 3 à 5 représentent des vues en coupe de trois variantes de zone réceptrice, selon le mode de réalisation de l'invention ;
- la figure 6 représente une vue schématique d'une pièce d'horlogerie comprenant un tel composant horloger pourvu d'une zone réceptrice comprenant l'élément fonctionnel, selon le mode de réalisation de l'invention, et
- la figure 7 représente un logigramme relatif à un procédé d'impression de l'élément fonctionnel sur une surface de réception de chaque zone réceptrice du composant horloger, selon le mode de réalisation de l'invention.

Description détaillée des modes de réalisation préférés

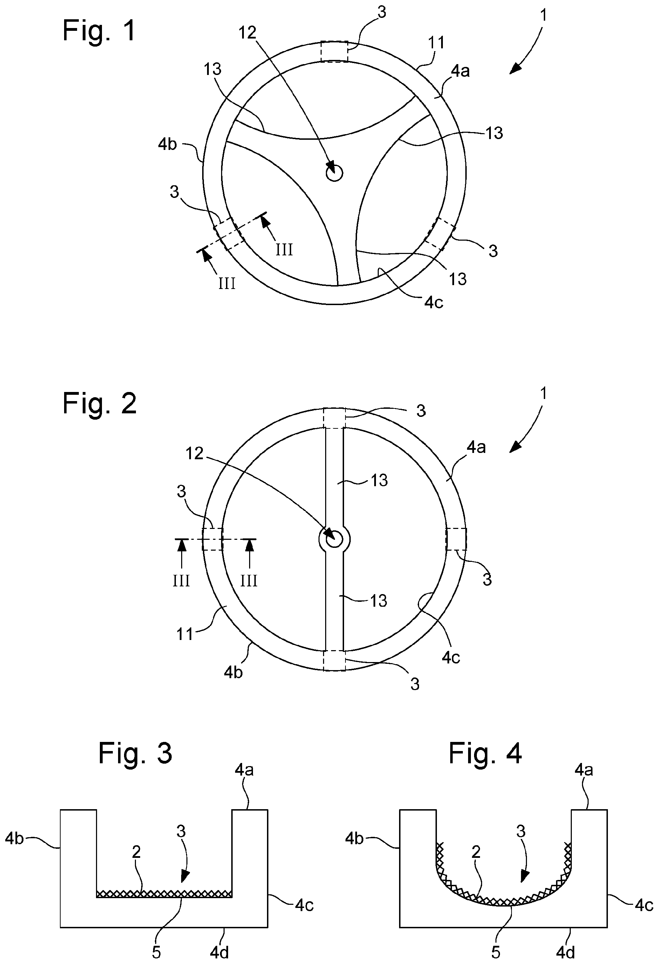

En référence aux figures 1 à 7, l'invention porte sur un procédé d'impression d'un élément fonctionnel 2 sur une surface de réception 5 d'une zone réceptrice 3 d'un composant horloger 1 d'une pièce d'horlogerie 100. On notera qu'un tel procédé est de préférence un procédé d'impression par jet d'aérosol également connu sous l'expression « aérosol jet ». On comprend cependant que dans d'autres modes de réalisation, ce procédé peut mettre en oeuvre d'autres technologies d'impression du type « high density inkjet », dosage pneumatique, dosage par extrusion à l'aide d'une vis sans fin ou encore « super inkjet ». Le procédé peut aussi mettre en oeuvre une technologie d'impression prévoyant la réalisation de dépôts de cordons par points à l'aide de dispositifs de crachage comme les « micro-drops ». Avec cette dernière technologie d'impression, ces points peuvent être disposés suffisamment près les uns des autres afin de former un élément fonctionnel 2 en ligne continue.

Un tel procédé vise notamment à ce que cet élément fonctionnel 2 imprimé sur cette surface 5 de la zone réceptrice 3 soit un élément fonctionnel 2 qui trouve donc une application fonctionnelle uniquement dans le domaine de l'horlogerie. Cet élément fonctionnel 2 est par exemple un élément décoratif/esthétique, un élément de réglage/ajustement du fonctionnement d'un composant horloger (par exemple : une masse inertielle), un élément d'interfaçage ou encore un élément d'identification certaine du composant horloger.

Cet élément fonctionnel 2 est formé d'un matériau solide pouvant comprendre de manière non exhaustive et non limitative au moins un précurseur moléculaire ou au moins une particule telle qu'une particule métallique ou d'oxyde métallique, une particule monocristalline ou polycristalline (comme l'alumine, le silicium) , une particule de matière amorphe (verre, métal, etc..), une particule de céramique, une particule d'un polymère, une particule pigmentée/colorée, une particule incolore, une particule translucide/transparente, une particule fluorescente ou encore une particule phosphorescente. En complément, on notera que la particule peut être du type nanoparticule ou microparticule.

Pour une meilleure compréhension de l'invention, il est ici décrit un mode de réalisation dans lequel l'élément fonctionnel 2 imprimé sur la surface 5 de la zone réceptrice 3 forme un élément de réglage/d'ajustement qui est du type masse inertielle. Cette masse inertielle 2 permet de participer au réglage de la marche de la pièce d'horlogerie notamment par la modification de l'inertie et/ou du balourd d'un composant horloger 1 de cette pièce 100, ici un balancier. En complément, l'invention peut aussi permettre de corriger dans ce contexte l'inertie et/ou le balourd d'un balancier-spiral seul ou d'un balancier-spiral monté dans un mouvement 110 de la pièce d'horlogerie 100, lequel mouvement 110 pouvant être montée dans un boîtier de cette pièce d'horlogerie lors des opérations de correction. On comprend bien que toutes les opérations mises en oeuvre dans le cadre du procédé d'impression décrit par la suite, restent les mêmes quel que soit le type d'élément fonctionnel 2 à imprimer sur la zone réceptrice 3.

Ainsi dans ce contexte, la figure 1 représente le balancier 1 d'un résonateur 120 du type balancier-spiral d'un mouvement horloger 110 d'une pièce d'horlogerie 100. Un tel balancier 1 est pourvu de ladite au moins une zone réceptrice 3 prévue pour recevoir l'élément fonctionnel 2 pour la réalisation du réglage de la marche de cette pièce d'horlogerie 100 et donc de son mouvement 110. Une telle zone réceptrice 3 peut comprendre :

- un évidement défini dans une face supérieure 4a du balancier 1 comme cela est illustré sur les figures 1 à 4, ou
- un évidement qui n'est pas représenté ici dans les figures et qui est défini dans une face inférieure 4d et/ou dans une première face latérale 4b et/ou d'une deuxième face latérale 4c de ce balancier 1, ou encore

- une portion de surface de la face supérieure 4a et/ou de la face inférieure 4d et/ou de la première face latérale 4b et/ou de la deuxième face latérale 4c de ce balancier 1 comme cela est illustré sur les figures 1, 2 et 5.

Les première et deuxième faces latérales 4b, 4c correspondent respectivement aux parois périphériques externe et interne de la serge 11. La zone réceptrice 3 comprend la surface de réception 5 de l'élément fonctionnel 2 qui peut être :

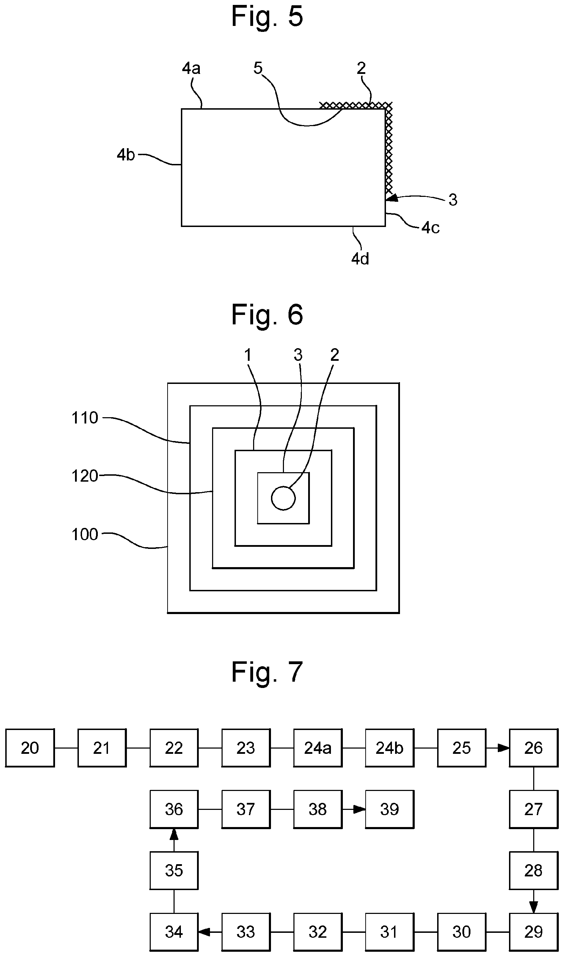

- plane comme dans la variante de la zone réceptrice 3 illustrée sur la figure 3, ou
- non-plane en étant courbée comme cela illustré sur la figure 4 ou en comprenant des sous surfaces reliées entre elles de manière perpendiculaire ou sensiblement perpendiculaire comme cela est représenté sur la figure 5.

En complément on notera que la surface de réception 5 est définie sur tout ou partie de la zone réceptrice 3.

Sur les figures 1 et 2, le balancier 1 comporte une serge 11, un moyeu 12 destiné à être monté pivotant sur un axe de balancier, et un ou plusieurs bras 13, par exemple deux, trois ou quatre bras 13, reliant la serge 11 au moyeu 12. Le balancier 1 comprend une face de réglage comprenant au moins une zone réceptrice 3 destinée à recevoir l'élément fonctionnel 2. Cette face de réglage comprend notamment la face supérieure 4a et/ou la face inférieure 4d et/ou la première face latérales 4b et/ou la deuxième face latérale 4c. Cette face de réglage est orientée de préférence vers le fond du boîtier de la pièce d'horlogerie 100 lorsque le balancier 1 est compris dans le mouvement horloger 110 qui est par exemple monté dans ce boîtier et ce, afin que chaque zone réceptrice 3 soit accessible pour une impression de l'élément fonctionnel 2 sur leur surface de réception 5. On notera que, la face supérieure 4a comprend une première partie comprise/définie dans la serge 11 du balancier 1 et une deuxième partie dans les bras 13 de ce balancier 1. Une telle face supérieure 4a est plane ou sensiblement plane, et s'étend dans un plan orthogonal à l'axe de balancier.

Ainsi que nous l'avons déjà évoqué, en référence aux figures 3 et 4, la zone réceptrice 3 peut-être un évidement tel qu'une gorge, une cavité ou encore une structure concave, en étant pourvu d'une ouverture, d'un fond plein pouvant avoir une surface sensiblement plane ainsi que d'une paroi interne reliant ladite ouverture audit fond. Un fond plein doit être entendu ici comme étant un fond dépourvu d'ouverture/d'orifice. Dans cette configuration, la surface de réception 5 est formée par le fond de cet évidement comme sur la figure 3, ou encore par le fond et une partie de la paroi interne comme sur la figure 4. Dans les exemples illustrés sur ces figures 3 et 4, les évidements sont définis uniquement dans la face supérieure 4a du balancier 1, et en particulier dans la serge 11, cette face 4a comporte alors plusieurs ouvertures donnant accès à un volume intérieur des évidements correspondants. Dans cette configuration, chaque évidement et donc chaque volume intérieur correspondant, est destiné à recevoir l'élément fonctionnel 2 agissant comme une masse inertielle afin de modifier l'inertie et/ou le balourd du balancier 1.

Dans une alternative non représentée, cet évidement peut être traversant en formant un trou traversant ou encore un trou sans fond comprenant alors une ouverture en ses deux extrémités. Dans cette configuration, la surface de réception est formée par la paroi interne de cet évidement.

Dans une autre alternative illustrée sur la figure 5, la zone réceptrice 3 n'est pas un évidement et peut être alors définie à la fois sur une portion de surface de la face supérieure 4a (ou la face inférieure 4d) et une portion de surface d'une des deux faces latérales 4b, 4c. Dans une alternative, la zone réceptrice 3 peut être localisée uniquement sur une portion de surface de la face supérieure 4a ou la face inférieure 4d ou encore une portion de surface de la face latérale 4b, 4c.

Dans une autre alternative, la zone réceptrice 3 peut être située à la fois :

- sur une portion de surface de la face supérieure 4a et des portions de surface des deux faces latérales 4b, 4c, ou
- sur une portion de surface de la face inférieure 4d et des portions de surface des deux faces latérales 4b, 4c.

La zone réceptrice 3 peut être définie dans/sur la serge 11 ou l'un des bras 13 du balancier 1. Lorsque le balancier 1 comporte plusieurs zones réceptrices 3, celles-ci peuvent être réparties uniquement dans/sur les bras 13 de ce balancier 1 ou uniquement dans/sur la serge 11 ou alors dans/sur les bras 13 et la serge 11 de ce balancier 1. Alternativement, lorsque le balancier 1 comprend une unique zone réceptrice 3, celle-ci peut être définie dans la face de réglage sur tout le contour de la serge 11.

Sur la figure 1, la serge 11 comporte plusieurs zones réceptrices 3, par exemple trois zones 3, réparties sur le pourtour de la serge 11. Chaque zone réceptrice 3 s'étend selon un arc de cercle d'un angle compris par exemple entre 5° et 120° et de préférence compris entre 20° et 60°. Sur la figure 2, la serge 11 comporte une multitude de zones réceptrices 3, par exemple quatre zones 3 ou plus, qui sont réparties sur le pourtour de cette serge 11. Ces zones réceptrices 3 s'étendent selon un arc de cercle d'un angle inférieur à 90° et de préférence inférieur à 45°. On comprend bien que l'invention peut être également mise en oeuvre pour une serge comprenant une seule zone réceptrice 3 ou deux zones réceptrices 3 ou encore plus de trois zones réceptrices 3.

Dans ces deux formes d'exécution, les zones réceptrices 3 peuvent par exemple être réparties sur ce pourtour de la serge 11 du balancier 1 de manière régulière de sorte à obtenir une distribution symétrique de l'élément fonctionnel 2 imprimé dans toutes les zones réceptrice 3 ou certains d'entre elles afin de modifier l'inertie et/ou le balourd du balancier 1 et ainsi ajuster de manière précise la marche du mouvement 110. Les zones réceptrices 3 selon les deux formes d'exécution précitées peuvent, selon un autre exemple, être réparties sur le pourtour de la serge 11 de manière asymétrique afin de modifier l'inertie et/ou le balourd du balancier 1 et son centre de masse par l'impression de l'élément fonctionnel 2 dans toutes les zones réceptrices 3 asymétriques ou certains d'entre elles. Dans un autre exemple, les zones réceptrices 3 du balancier 1 sont réparties de manière symétrique sur la serge 11 du balancier 1 et l'élément fonctionnel 2 est imprimée uniquement dans certaines de ces zones réceptrices 3 qui présentent une configuration asymétrique les unes par rapport aux autres.

Ainsi que nous l'avons évoqué précédemment, chaque zone réceptrice 3 débouche sur la face de réglage du balancier 1, cette face lorsqu'elle est constituée uniquement de la face supérieure 4a et/ou des deux faces latérales 4b, 4c, est destinée à être agencée sensiblement en regard du fond du boîtier de la pièce d'horlogerie 100 lorsque le mouvement horloger 110 est monté dans ce boîtier. Dans une telle configuration, il est par conséquent possible de faire un dernier réglage de la marche du mouvement horloger 110 lorsqu'il est monté dans la carrure de la pièce d'horlogerie 100, avant l'assemblage du fond du boîtier avec la carrure, en ajustant un dispositif d'application de l'élément fonctionnel 2 audessus du balancier 1 tout en s'assurant que la masse oscillante de cette pièce d'horlogerie 100 est dégagée du résonateur 120 du mouvement 110 pour un mouvement du type automatique. Dans ce mode de réalisation, le dispositif de projection est apte à mettre en oeuvre une technologie d'impression du type jet d'aérosol qui autorise une nébulisation très précise avec un très faible volume de matière.

La figure 7 représente le procédé d'impression de l'élément fonctionnel 2 sur la surface 5 de la zone réceptrice 3 du composant horloger 1 de la pièce d'horlogerie 100. Plus précisément, dans le mode de réalisation de l'invention ici décrit, l'impression d'un tel élément fonctionnel 2 sur le composant horloger 1, le balancier 1 ou encore un balancier-spiral, participe à réaliser le réglage de la marche de la pièce d'horlogerie 100. Dans ces conditions, un tel procédé est aussi un procédé d'impression, notamment par jet d'aérosol, de l'élément fonctionnel 2 sur la surface 5 de la zone réceptrice 3 de ce composant 1 de la pièce d'horlogerie 100 contribuant au réglage de la marche de la pièce d'horlogerie 100 notamment par la modification de l'inertie et/ou du balourd de ce composant 1.

Un tel procédé comprend une étape de préparation 20 d'une solution comportant ledit matériau constituant l'élément fonctionnel 2 à imprimer sur le composant horloger 1. Une telle solution peut être à l'état liquide plus ou moins visqueux ou pâteux. Dans ce mode de réalisation, cette solution comprenant ce matériau peut-être alors une encre c'est-à-dire une solution liquide qui peut être séchée par évaporation ou curée par polymérisation après son dépôt sur la zone réceptrice 3 de sorte à assurer l'application du matériau solide sur cette dite zone 3.

Cette étape de préparation 20 comporte une sous-étape de définition 21 de propriétés spécifiques de la solution en fonction de critères de préparation. Dans cette sous-étape 21, les propriétés spécifiques de la solution sont relatives à la viscosité et la tension superficielle de cette solution. Dans ce mode de réalisation, ces propriétés sont aussi relatives à la densité de ladite solution. S'agissant des critères de préparation, ceux-ci comprennent :

- au moins une caractéristique de modification structurelle du composant horloger 1 ;
- au moins une caractéristique de construction de l'élément fonctionnel 2 sur ladite zone réceptrice 3 ;
- au moins une caractéristique structurelle du matériau solide constituant l'élément fonctionnel 2 à appliquer sur ladite zone réceptrice 3
- au moins une caractéristique de ladite zone réceptrice 3 du composant 1, et
- au moins une caractéristique de la technologie d'impression mise en oeuvre par le présent procédé.

La sous-étape de définition 21 comprend une phase de détermination 22 de ladite au moins une caractéristique de modification structurelle du composant horloger 1. Dans le contexte de ce mode de réalisation de l'invention dans lequel l'application de l'élément fonctionnel 2 sur ce composant 1 vise à régler la marche de la pièce d'horlogerie 100, cette dite au moins une caractéristique de modification structurelle comprend une valeur de correction de marche résultant de valeurs de correction de l'inertie et/ou du balourd du balancier 1 afin d'obtenir une marche ajustée/corrigée du mouvement horloger 110 et donc de la pièce d'horlogerie 100.

Toujours dans le contexte de ce mode de réalisation de l'invention dans lequel l'application de l'élément fonctionnel 2 sur ce composant 1 vise à régler la marche de la pièce d'horlogerie 100, cette phase de détermination 22 comporte une sous-phase de mesure 23 de la marche du mouvement horloger 110. Cette mesure peut être réalisée de préférence sans contact étant donné que l'accès au résonateur est particulièrement étroit. De manière connue, la mesure de la marche du mouvement 110 peut ainsi être réalisée, par exemple, selon des technologies optiques et/ou acoustiques. Cette sous-phase de mesure 23 permet de comparer la marche mesurée avec une marche souhaitée. D'autre part, elle permet également de connaître le battement du balancier 1 afin de pouvoir le synchroniser avec l'impression de l'élément fonctionnel 2 sur la surface de réception 5 de chaque zone réceptrice 3 du balancier 1.

Toujours dans le contexte de ce mode de réalisation visant à régler la marche de la pièce d'horlogerie 100, la phase de détermination 22 comporte ensuite une sous-phase d'estimation 24a de la valeur de correction de l'inertie du balancier 1 pour obtenir une marche corrigée. Cette valeur de correction est déterminée par les formules connues suivantes :

Pour un résonateur du type balancier-spiral, le moment d'inertie *I* du balancier répond à la formule :

$$ I = mr^2 \qquad (1) $$

dans laquelle *m* représente la masse du balancier 1 et *r* son rayon de giration qui dépend également de la température par l'intermédiaire du coefficient de dilatation du balancier 1.

De plus, le couple élastique C du spiral à section constante répond à la formule :

$$ C = \frac{Ehe^3}{12L} \qquad (2) $$

dans laquelle *E* est le module de Young du matériau utilisé, *h* sa hauteur, *e* son épaisseur et *L* sa longueur développée.

Enfin, la fréquence *f* du résonateur 120 comprenant le balancier-spiral répond à la formule:

$$ f = \frac{1}{2\pi}\sqrt{\frac{C}{I}} \qquad (3) $$

La phase de détermination 22 comporte aussi une sous-phase d'estimation 24b de la valeur de correction du balourd du balancier 1 pour obtenir une marche corrigée. L'estimation d'un telle valeur de correction est bien connue de l'état de la technique et est notamment décrite dans les documents WO2012007460 et EP2864844A1.

Par la suite, la sous-étape de définition 21 comprend une phase de détermination 25 de ladite au moins une caractéristique de construction de l'élément fonctionnel 2 sur ladite zone réceptrice 3. Lors de cette phase 25, les caractéristiques de construction telles que des dimensions géométriques et/ou des propriétés mécaniques, chimiques et/ou esthétiques de l'élément fonctionnel 2, sont déterminées. On notera que les dimensions géométriques de l'élément fonctionnel 2 qui sont déterminées ici concernent en particulier l'épaisseur, la longueur, la largeur et/ou le rayon de cet élément fonctionnel 2, permettant de définir la valeur de la correction de marche. L'élément fonctionnel 2 qui est construit sur la zone réceptrice peut avoir une section rectangulaire ou encore une section représentant une portion d'un disque. Cette section dépend ici des tensions superficielles de la solution et de la surface de réception de la zone réceptrice 3.

Cette sous-étape de définition 21 comprend aussi une phase de détermination 26 de ladite au moins une caractéristique structurelle du matériau à appliquer sur ladite zone réceptrice 3. Lors de cette phase 26, les caractéristiques structurelles telles que des propriétés esthétiques, physiques et/ou chimiques comme la densité et la tension de surface de ce matériau, sont déterminées. On notera que cette densité du matériau est celle de ce même matériau qui constituera l'élément fonctionnel 2 imprimé sur la zone réceptrice 3 et après donc la solidification de cet élément 2 sur cette zone 3 notamment suite à l'évaporation d'un solvant de la solution.

La sous-étape de définition 21 comprend également une phase de détermination 27 de ladite au moins une caractéristique de ladite zone réceptrice 3 du composant 1. Lors de cette phase 27, les caractéristiques de la zone réceptrice 3 telles que des dimensions géométriques de la surface de la zone réceptrice 3 susceptible d'être recouverte par l'élément fonctionnel 2 et/ou des propriétés mécaniques et/ou chimiques de la matière constituant cette zone 3 telles que des propriétés 5 d'adhésion et/ou de rugosité de la surface et/ou d'énergie de surface et/ou de tension superficielle de la surface de cette zone réceptrice 3, sont déterminées.

En outre ainsi que nous l'avons évoqué précédemment plusieurs technologies d'impression peuvent être mises en oeuvre par le procédé d'impression. Dans ces conditions, un tel procédé prévoit lors de la sous-étape de définition 21, une phase de détermination 28 d'au moins une caractéristique de la technologie d'impression mise en oeuvre dans ce procédé. Ainsi cette phase 28 permet d'identifier la technologie d'impression utilisée.

De telles phases de détermination référencées 25, 26 et 27, se réalisent de préférence par expérimentation sur des substrats équivalents à la surface de réception 5 de la zone réceptrice 3 du composant horloger 1 qu'on cherche à modifier. De telles phases peuvent prévoir de manière non limitative et non exhaustive des opérations d'observation sous microscope optique, de réalisation de tests d'adhérence, de profilométrie optique ou mécanique, de microscopie à balayage d'électrons (en anglais, SEM), de spectroscopie dispersive à rayons X (en anglais, EDX), de mesures d'énergie de surface du substrat basée sur des liquides de référence (e.g. eau, éthylène glycol), de mesures de tension de surface des solutions et/ou des tests de mouillabilité tels que la mesure d'angle de contact entre la solution et le substrat constituant la zone réceptrice 3.

Ensuite, selon l'invention telle que revendiquée, la sous-étape de définition 21 comprend une phase de génération 29 des propriétés spécifiques de la solution à partir desdits critères de préparation estimés lors des phases de détermination 25, 26, 27, 28 précédentes. Rappelons que ces critères de préparation permettent notamment de déterminer la quantité et la nature du matériau solide à appliquer sur la surface de la zone réceptrice du composant horloger au regard desquelles, quantité et nature du matériau, les propriétés de viscosité, de tension superficielle et de densité sont estimées. On notera en particulier que la quantité et la nature du matériau sont déterminantes notamment pour les propriétés de densité, de viscosité et aussi pour le choix des additifs qui contribuent à définir la tension superficielle de la solution.

Selon l'invention telle que revendiquée, lors de cette phase de génération 29, la propriété de viscosité de la solution qui est déterminée à partir de ces critères de préparation, doit être suffisamment grande pour éviter l'étalement, voire l'éclatement de gouttes résultant de la projection de la solution au-delà de la zone réceptrice 3 cible de l'impression de cette solution. Cette propriété de viscosité est donc établie en considération de la taille de la zone réceptrice 3 et dans certaine variante aussi en considération de critères esthétiques portant sur l'aspect final de l'élément fonctionnel 2. A titre d'exemple, pour une zone réceptrice 3 limitée à une largeur de l'ordre de 100 μm, la propriété de viscosité de la solution déterminée définit une viscosité qui doit être supérieure 1 cP, de préférence supérieure à 50 cP. On notera aussi qu'en fonction du type de technologie d'impression mise en oeuvre par le procédé d'impression, une très haute viscosité serait susceptible d'entraver le bon déroulement de ce procédé notamment en altérant la vitesse d'impression mise en oeuvre dans ce dernier. Par exemple, dans le cadre d'une impression par jet d'aérosol, une viscosité au-dessus de 1000 cP pourrait empêcher la production du jet d'aérosol.

Concernant la propriété de tension superficielle de cette solution, lors de cette phase de génération 29, une telle propriété est ajustée en correspondance avec l'énergie de surface du substrat dans la zone réceptrice 3. Selon l'invention telle que revendiquée, cette tension de surface de la solution est inférieure à l'énergie de surface de ce substrat. Cette condition peut être analysée par des mesures de l'une et l'autre quantité. L'énergie de surface du substrat peut être mesurée, par exemple, en fonction de l'angle de contact avec des solvants de référence comme l'eau, l'éthylène glycol ou le diiodométhane. La tension superficielle de la solution peut être déterminée, par exemple, par la méthode de la goutte pendante. Alternativement, on peut mesurer l'angle de contact directement entre la solution et le substrat. En général, on cherchera à avoir une bonne mouillabilité, soit, un angle de contact compris environ entre 0° et 90°. Pour obtenir cette condition on peut agir sur la tension superficielle de la solution, en ajoutant des agent mouillants (additifs correcteurs de la tension superficielle), ou en modifiant le substrat de la zone réceptrice pour changer son énergie de surface. Lorsque cette modification du substrat est contrôlée spatialement, elle apporte un avantage supplémentaire de définition de la zone réceptrice 3.

S'agissant de la propriété relative à la densité de la solution, elle est surtout déterminée par la part en masse du matériau solide qui compose cette solution ainsi que par la densité intrinsèque de ce matériau. On comprend qu'une grande densité de la solution permet de faire un apport en masse plus rapide sur le composant horloger à traiter, ce qui représente un avantage en termes de production industrielle. D'autre part, la quantité de matériau solide détermine aussi la viscosité et en très grande quantité, peut limiter la précision ou même la possibilité de réaliser l'impression.

Par la suite, l'étape de préparation 20 comprend une sous-étape de composition 30 d'un mélange relatif à ladite solution en fonction des propriétés spécifiques définies précédemment relatives à cette solution. Une telle sous-étape 30 comprend une phase de réalisation 31 d'une préparation de base comprenant ledit matériau solide selon la nature et la quantité déterminée précédemment, et un liquide de base par exemple un solvant ou un mélange de différents solvants. Par la suite, cette sous-étape 30 comporte une phase de sélection 32 d'au moins un produit à ajouter dans ladite préparation de base, ledit au moins un produit étant choisi parmi les produits suivants :

- des additifs de correction de la tension superficielle tels que des agents mouillants, et/ou
- des agents dispersants contribuant à la stabilité de la dispersion de particules du matériau solide.

Ensuite, l'étape de préparation 20 de la solution peut comprendre de manière optionnelle une sous-étape de mélange 33 d'au moins un produit sélectionné avec la préparation de base. Lors de cette sous-étape 33, le ou les additif (s) de correction et/ou dispersant (s) est (sont) ajouté (s) dans la préparation de base en fonction des propriétés spécifiques définies précédemment pour la solution. Plus précisément, lors de cette sous-étape de mélange 33, il convient d'obtenir la solution en ajustant :

- la viscosité de cette solution selon la viscosité déterminée et ce, en faisant varier la proportion du ou des produits sélectionnés du mélange, principalement le solvant en fonction de la quantité et de la nature du matériau et ;
- la tension superficielle de cette solution selon la tension superficielle déterminée et ce, en faisant varier en fonction de la quantité et de la nature du matériau, la proportion du ou des produits sélectionnés du mélange, principalement les additifs ;

- la densité de cette solution selon la densité déterminée et ce, en faisant varier en fonction de la quantité et de la nature du matériau, la proportion du ou des produits sélectionnés du mélange, principalement la quantité de particules.

Par la suite, le procédé comprend une étape de dépôt 34 de la solution préparée sur toute la surface 5 de la zone réceptrice 3. Dans ce mode de réalisation, une telle étape 34 contribue à participer à la construction de l'élément fonctionnel 2 sur une ou plusieurs zones réceptrices 3 du balancier 1 afin de modifier l'inertie et/ou le balourd de ce balancier 1 selon la valeur de correction de marche. Cette étape de dépôt 34 comporte une sous-étape d'application 35 de la solution préparée sur toute la surface 5 de la zone réceptrice 3 du composant 1. Une telle sous-étape 35 participe à l'application de la solution comprenant le matériau sur le composant 1 dans l'optique de construire l'élément fonctionnel 2. Une telle sous-étape d'application 35 comprend une phase de transformation 36 de la solution préparée en un aérosol lorsque la technologie d'impression est par jet d'aérosol. Cette phase 36 comprend une sous-phase de nébulisation 37 de la solution préparée qui participe à transformer cette solution en un aérosol.

L'étape de dépôt 34 comprend ensuite une sous-étape de solidification 38 du matériau de la solution appliqué sur la surface de la zone réceptrice 3. Cette sous-étape 38 vise à finaliser la construction de cet élément fonctionnel 2 appliquée sur la zone réceptrice 3 du composant 1. Cette sous-étape 38 peut consister à poursuivre l'évaporation du solvant de la solution ayant débutée dès la mise en oeuvre de la sous-étape d'application 35, à thermo-durcir le matériau constituant l'élément fonctionnel 2 ou encore à réticuler ce matériau sur la surface 5 de la zone réceptrice 3. Ainsi que nous venons de l'évoquer, cette sous-étape de solidification 38 débute de préférence en même temps ou sensiblement en même temps que la sous-étape d'application 35 et s'achève après la réalisation de cette sous-étape d'application 35 et ce, afin d'améliorer la précision de positionnement de l'élément fonctionnel 2 dans la zone réceptrice 3.

Le procédé peut prévoir une étape de réitération 39 de l'étape de dépôt 34 qui est mise en oeuvre autant de fois qu'il est nécessaire afin de construire l'élément fonctionnel 2 sur la zone réceptrice 3 du composant horloger 1. Cet élément fonctionnel 2 peut être monobloc ou être formé de plusieurs parties disjointes comme par exemple une succession de points séparés les uns des autres.

Ainsi, grâce notamment à la préparation et à la composition particulière de la solution comprenant le matériau à appliquer sur le composant horloger 1, le procédé permet avantageusement la réalisation d'une impression de l'élément fonctionnel 2 sur ce composant 1 qui est ciblée et d'une grande précision. En termes de positionnement, il est possible d'atteindre un centrage des dépôts de l'ordre de 5 $\mu$m de précision. Ceci est d'avantage limité par le système de moteurs de micro-positionnement que par le ciblage d'éjection du mélange final. Quant à la quantité de matière ajoutée, elle peut être contrôlée dans l'ordre des nano-grammes, bien en dessous du seuil de sensibilité des applications horlogères.

De plus, cette impression de l'élément fonctionnel 2 de type masse inertielle est effectuée sans la production d'éclaboussures/projections subséquentes au dépôt comme cela est attendu pour la réalisation d'un composant horloger 1 et ce, avec un haut degré de contrôle sur la masse inertielle déposée. On notera que la production de telles éclaboussures/satellites lors du dépôt est souvent à l'origine de la contamination du mouvement horloger 110 et de potentiels dysfonctionnements de ce dernier. De plus, ce procédé permet une application homogène, et donc avec une distribution de masse homogène, du matériau sur le composant horloger 1 et ce, que la surface 5 de la zone réceptrice 3 soit plane ou non-plane. Autrement dit, l'élément fonctionnel 2 peut être imprimé de manière homogène et avec la même résolution sur toute une surface de réception 5 tridimensionnelle d'un composant horloger 1 immobile ou en mouvement. On notera en complément qu'une telle solution ainsi élaborée participe également à :

- définir géométriquement la position de l'élément fonctionnel 2 sur la surface 5 de la zone réceptrice 3 ;
- améliorer l'esthétique de l'élément fonctionnel 2 sur la surface de réception 5 ;
- faciliter l'adhérence de l'élément fonctionnel 2 sur cette surface 5, indépendamment d'une éventuelle préparation de cette surface 5 ;
- proposer un procédé d'impression qui est répétable, et
- proposer un procédé d'impression qui est industrialisable.

Dans un exemple, une telle invention peut être mise en oeuvre dans le cadre d'un ajustement d'un moment d'inertie d'un résonateur horloger de type balancier-spiral, un tel ajustement visant à corriger la marche de l'oscillateur d'un ordre de grandeur de -5 secondes/jour. On comprend d'abord que le signe négatif indique ici que la marche peut être corrigée uniquement en réduisant la fréquence d'oscillation, car l'ajout de matière de l'invention peut uniquement augmenter le moment inertiel du balancier. Dans ce contexte, si on considère la masse et le rayon de la serge d'un balancier horloger standard, on peut estimer qu'une impression de l'élément fonctionnel sur la serge du balancier comprenant le matériau solide présentant une masse de l'ordre d'une dizaine de microgrammes permet de réaliser une telle correction de la marche selon l'ordre de grandeur énoncé précédemment. Pour ce faire, la solution comportant ledit élément fonctionnel comprend :

- 95% en poids de la préparation de base soit :

  • 20% en poids d'un solvant tel que de l'eau, et
  • 75% en poids du matériau solide tel qu'au moins une nanoparticule de carbure de tungstène produite par la société US Research Nanomaterials, Inc et qui présente une taille comprise entre 150nm et 200nm , et

- 5% en poids d'un agent mouillant tel qu'un additif de Polyuréthane produit par la société Lubrizol sous la marque Solsperse Solsperse®J948.

Une telle solution est configurée pour la technologie d'impression du type « jet d'aérosol » autorisant ainsi un débit de matériau solide de l'ordre de 2 $\mu$g de carbure de tungstène par seconde. La viscosité et la tension superficielle de cette solution permet de cibler le dépôt sur une section d'arc de la serge du balancier d'une épaisseur de 300 $\mu$m. Ainsi, la correction de la marche du résonateur horloger peut être accompli dans un délai de quelques secondes. En outre, on notera qu'avec 75% en poids de carbure de Tungstène (densité 15.6 g/ml) et 25% en poids d'eau et 5% en poids d'additif de Polyuréthane (densité ~1 g/ml), la densité de la solution est ici de l'ordre de 3.4 g/ml.

## Revendications

1. Procédé d'impression d'un élément fonctionnel (2) sur une surface (5) d'une zone réceptrice (3) d'un composant horloger (1) d'une pièce d'horlogerie (100) contribuant au réglage de la marche de cette pièce d'horlogerie (100) notamment par la modification de l'inertie et/ou du balourd de ce composant (1), ledit procédé comprenant les étapes suivantes :

   - préparation (20) d'une solution comportant un matériau constituant ledit élément fonctionnel (2), ladite étape de préparation (20) comprenant une sous-étape de définition (21) de propriétés spécifiques de la solution en fonction de critères de préparation, lesdites propriétés étant relatives à une viscosité et à une tension superficielle de cette solution et les critères de préparation comprenant :

      • des caractéristiques de modification structurelle du composant horloger (1) ;
      • des caractéristiques de construction de l'élément fonctionnel (2) sur ladite zone réceptrice (3) lesdites caractéristiques comportant des dimensions géométriques, des propriétés mécaniques, chimiques et esthétiques de l'élément fonctionnel à construire,
      • des caractéristiques structurelles du matériau à appliquer sur la zone réceptrice, ces caractéristiques comprenant des propriétés esthétiques, physiques et chimiques comprenant la densité dudit matériau, et
      • des caractéristiques de ladite zone réceptrice (3) du composant (1) comprenant des dimensions géométriques de la surface de la zone réceptrice susceptible d'être recouverte par l'élément fonctionnel, des propriétés mécaniques et chimiques de la matière constituant la zone, lesdites propriétés comportant des propriétés d'adhésion, de rugosité de la surface, d'énergie de surface et de tension superficielle de la surface de cette zone réceptrice,

   - dépôt (34) par un dispositif de projection de ladite solution préparée sur la surface (5) de la zone réceptrice, ladite sous-étape de définition (21) comprenant une phase de génération (29) des propriétés spécifiques de la solution à partir desdits critères de préparation estimés lors de phases de détermination (22, 25, 26, 27, 28) :

      - des caractéristiques de modification structurelle du composant horloger (1) ;
      - des caractéristiques de construction de l'élément fonctionnel (2) sur ladite zone réceptrice ;
      - des caractéristiques structurelles du matériau à appliquer sur ladite zone réceptrice (3) ;
      - des caractéristiques de ladite zone réceptrice (3) du composant (1) ; et

   - des caractéristiques relatives à la technologie d'impression mise en oeuvre dans ce procédé, procédé d'impression dans lequel, lors de cette phase de génération (29) :

      - la propriété de viscosité de la solution est déterminée à partir de ces critères de préparation, et est suffisamment grande pour éviter l'étalement, voire l'éclatement de gouttes résultant d'une projection de la solution au-delà de la zone réceptrice (3) cible de l'impression de cette solution, cette propriété de viscosité étant établie en considération de la taille de la zone réceptrice (3) et aussi en considération de critères esthétiques portant sur l'aspect final de l'élément fonctionnel (2), et
      - la propriété de tension superficielle de cette solution est ajustée en correspondance avec l'énergie de surface dans la zone réceptrice (3) de ce composant horloger, cette tension de surface de la solution étant inférieure à l'énergie de surface dans la zone réceptrice (3).

2. Procédé selon la revendication précédente, **caractérisé en ce que** l'étape de préparation (20) comprend une sous-étape de composition (30) d'un mélange relatif à ladite solution en fonction des propriétés spécifiques définies de cette solution, ladite sous-étape (30) comprenant une phase de réalisation (31) d'une préparation de base comprenant ledit matériau et un liquide de base notamment un solvant.

3. Procédé selon la revendication précédente, **caractérisé en ce que** ladite sous-étape de composition (30) comporte une phase de sélection (32) d'au moins un produit à ajouter dans ladite préparation de base, ledit au moins produits étant choisis parmi :

- des additifs de correction de la tension superficielle tels que des agents mouillants, et/ou
- des agents dispersants contribuant à la stabilité de la dispersion de particules du matériau solide.

4. Procédé selon l'une quelconque des revendications 2 et 3, **caractérisé en ce que** l'étape de préparation (20) de la solution comprend une sous-étape de mélange (33) d'au moins un produit sélectionné avec la préparation de base.

5. Procédé selon l'une quelconque des revendications précédentes, **caractérisé en ce que** l'étape de dépôt (34) comprend une sous-étape d'application (35) de la solution préparée sur toute la surface (5) de la zone réceptrice (3).

6. Procédé selon la revendication précédente, **caractérisé en ce que** la sous-étape d'application (35) est réalisée selon une technologie d'impression du type « jet d'aérosol », « high density ink jet », « dosage pneumatique », « dosage par extrusion » ou encore « super ink jet ».

7. Procédé selon l'une quelconque des revendications 5 et 6, **caractérisé en ce que** la sous-étape d'application (35) comprend une phase de transformation (36) de la solution préparée en un aérosol lorsque la technologie d'impression est par jet d'aérosol.

8. Procédé selon l'une quelconque des revendications précédentes, **caractérisé en ce que** l'étape de dépôt (34) comprend une sous-étape de solidification (38) du matériau de la solution appliqué sur la surface de la zone réceptrice (3).

9. Procédé selon la revendication précédente, **caractérisé en ce que** la sous-étape de solidification (38) débute en même temps ou sensiblement en même temps que la sous-étape d'application (35) et s'achève après la réalisation de cette sous-étape d'application (35).

10. Procédé selon l'une quelconque des revendications précédentes, **caractérisé en ce que** les propriétés spécifiques de la sous-étape de définition (21) sont aussi relatives à une densité de ladite solution.

11. Procédé selon l'une quelconque des revendications précédentes, **caractérisé en ce que** le matériau comprend au moins un précurseur moléculaire ou au moins une particule telle qu'une particule métallique ou d'oxyde métallique, une particule monocristalline ou polycristalline, une particule de matière amorphe, une particule de céramique, une particule d'un polymère, une particule pigmentée/colorée, une particule incolore, une particule translucide/transparente, une particule fluorescente ou encore une particule phosphorescente.

12. Procédé selon l'une quelconque des revendications précédentes, **caractérisé en ce que** le matériau comprend au moins une particule du type nanoparticule ou microparticule.

13. Procédé selon l'une quelconque des revendications précédentes, **caractérisé en ce que** l'élément fonctionnel (2) appliquée sur la surface (5) de la zone réceptrice (3) du composant horloger (1) de la pièce d'horlogerie (100) comprend un élément décoratif/esthétique, un élément de réglage du fonctionnement d'un composant horloger tel qu'une masse inertielle ou un élément d'interfaçage.

14. Procédé selon l'une quelconque des revendications précédentes, **caractérisé en ce qu'**il comprend une étape de réitération (39) de l'étape de dépôt (34).

15. Procédé selon l'une quelconque des revendications précédentes, **caractérisé en ce qu'**il est un procédé d'impression, notamment par jet d'aérosol, d'un élément fonctionnel (2) sur la surface (5) d'une zone réceptrice (3) du composant (1) de la pièce d'horlogerie (100) contribuant au réglage de la marche de cette pièce d'horlogerie (100) notamment par la modification de l'inertie et/ou du balourd de ce composant (1).

**Patentansprüche**

1. Verfahren zum Drucken eines Funktionselements (2) auf einer Oberfläche (5) einer Aufnahmezone (3) einer Uhrkomponente (1) einer Uhr (100), das zum Einstellen des Gangs der Uhr (100), insbesondere durch die Modifikation der Trägheit und/oder der Unwucht der Komponente (1), beiträgt, wobei das Verfahren die folgenden Schritte umfasst:

- Vorbereiten (20) einer Lösung, die ein Material enthält, aus dem das Funktionselement (2) besteht, wobei der Schritt des Vorbereitens (20) einen Unterschritt des Definierens (21) spezifischer Eigenschaften der Lösung in Abhängigkeit von Vorbereitungskriterien umfasst, wobei die Eigenschaften eine Viskosität und eine Oberflächenspannung der Lösung betreffen und die Vorbereitungskriterien Folgendes umfassen:

> • strukturelle Modifikationsmerkmale der Uhrkomponente (1);
> • Konstruktionsmerkmale des Funktionselements (2) in der Aufnahmezone (3), wobei diese Merkmale geometrische Abmessungen sowie mechanische, chemische und ästhetische Eigenschaften des zu konstruierenden Funktionselements enthalten,
> • Strukturmerkmale des Materials, das in die Aufnahmezone aufgetragen werden soll, wobei die Merkmale ästhetische, physikalische und chemische Eigenschaften umfassen, die die Dichte des Materials umfassen, und
> • Merkmale der Aufnahmezone (3) der Komponente (1), die geometrische Abmessungen der Oberfläche der Aufnahmezone, die durch das Funktionselement abgedeckt werden kann, sowie mechanische und chemische Eigenschaften des Materials, aus dem die Zone besteht, umfassen, wobei die Eigenschaften Haftungs-, Oberflächenrauheits-, Oberflächenenergie- und Oberflächenspannungseigenschaften der Oberfläche der Aufnahmezone enthalten; und

> - Aufbringen (34) der vorbereiteten Lösung auf die Oberfläche (5) der Aufnahmezone durch eine Sprühvorrichtung,

wobei der Unterschritt des Definierens (21) eine Phase des Erzeugens (29) der spezifischen Eigenschaften der Lösung aus den während der Phasen des Bestimmens (22, 25, 26, 27, 28) geschätzten Vorbereitungskriterien umfasst:

> - strukturelle Modifikationsmerkmale der Uhrkomponente (1);
> - Konstruktionsmerkmale des Funktionselements (2) in der Aufnahmezone;
> - Strukturmerkmale des Materials, das in die Aufnahmezone (3) aufgetragen werden soll;
> - Merkmale der Aufnahmezone (3) der Komponente (1); und
> - Merkmale, die die im Verfahren implementierte Drucktechnologie betreffen,

wobei im Druckverfahren während der Erzeugungsphase (29):

> - die Viskositätseigenschaft der Lösung anhand der Vorbereitungskriterien bestimmt wird und ausreichend hoch ist, um ein Ausbreiten oder sogar Platzen von Tröpfchen zu verhindern, die durch ein Versprühen der Lösung über die Zielaufnahmezone (3) für das Drucken der Lösung hinaus entstehen, wobei die Viskositätseigenschaft unter Berücksichtigung der Größe der Aufnahmezone (3) und auch unter Berücksichtigung ästhetischer Kriterien hinsichtlich des endgültigen Erscheinungsbilds des Funktionselements (2) festgelegt wird, und

- die Oberflächenspannungseigenschaft der Lösung entsprechend der Oberflächenenergie in der Aufnahmezone (3) der Uhrenkomponente angepasst wird, wobei die Oberflächenspannung der Lösung geringer ist als die Oberflächenenergie in der Aufnahmezone (3).

2.  Verfahren nach dem vorhergehenden Anspruch, **dadurch gekennzeichnet, dass** der Schritt des Herstellens (20) einen Unterschritt des Zusammensetzens (30) einer Mischung in Bezug auf die Lösung in Abhängigkeit von den definierten spezifischen Eigenschaften der Lösung umfasst, wobei der Unterschritt (30) eine Phase des Herstellens (31) einer Basiszubereitung umfasst, die das Material und eine Basisflüssigkeit, insbesondere ein Lösungsmittel, umfasst.

3.  Verfahren nach dem vorhergehenden Anspruch, **dadurch gekennzeichnet, dass** der Unterschritt des Zusammensetzens (30) eine Phase des Auswählens (32) mindestens eines Produkts enthält, das der Basiszubereitung hinzugefügt werden soll, wobei das mindestens eine Produkt aus Folgendem ausgewählt wird:

> - Zusatzstoffe zur Korrektur der Oberflächenspannung wie beispielsweise Netzmittel, und/oder
> - Dispergiermittel, die zur Stabilität der Dispersion von Partikeln des festen Materials beitragen.

4.  Verfahren nach einem der Ansprüche 2 und 3, **dadurch gekennzeichnet, dass** der Schritt des Vorbereitens (20) der Lösung einen Unterschritt des Mischens (33) mindestens eines ausgewählten Produkts mit der Basiszubereitung umfasst.

5.  Verfahren nach einem der vorhergehenden Ansprüche, **dadurch gekennzeichnet, dass** der Schritt des Aufbringens (34) einen Unterschritt des Auftragens (35) der vorbereiteten Lösung auf die gesamte Oberfläche (5) der Aufnahmezone (3) umfasst.

6.  Verfahren nach dem vorhergehenden Anspruch, **dadurch gekennzeichnet, dass** der Unterschritt des Auftragens (35) nach einer Drucktechnologie vom Typ "Aerosol-Strahl", "Tintenstrahl mit hoher Dichte", "pneumatisches Dosierdrucken", "Extrusions-Dosierdrucken" oder auch "Super-Inkjet" durchgeführt wird.

7. Verfahren nach einem der Ansprüche 5 und 6, **dadurch gekennzeichnet, dass** der Unterschritt des Auftragens (35) eine Phase des Umwandelns (36) der vorbereiteten Lösung in ein Aerosol umfasst, wenn die Drucktechnologie durch einen Aerosol-Strahl erfolgt.

8. Verfahren nach einem der vorhergehenden Ansprüche, **dadurch gekennzeichnet, dass** der Schritt des Aufbringens (34) einen Unterschritt des Verfestigens (38) des Materials der auf die Oberfläche der Aufnahmezone (3) aufgetragenen Lösung umfasst.

9. Verfahren nach dem vorhergehenden Anspruch, **dadurch gekennzeichnet, dass** der Unterschritt des Verfestigens (38) gleichzeitig oder im Wesentlichen gleichzeitig mit dem Unterschritt des Auftragens (35) beginnt und nach dem Durchführen des Unterschritts des Auftragens (35) endet.

10. Verfahren nach einem der vorhergehenden Ansprüche, **dadurch gekennzeichnet, dass** die spezifischen Eigenschaften des Unterschritts des Definierens (21) auch eine Dichte der Lösung betreffen.

11. Verfahren nach einem der vorhergehenden Ansprüche, **dadurch gekennzeichnet, dass** das Material mindestens einen molekularen Vorläufer oder mindestens ein Teilchen, wie beispielsweise ein Metall- oder Metalloxidteilchen, ein monokristallines oder polykristallines Teilchen, ein Teilchen aus amorphem Material, ein Keramikteilchen, ein Teilchen aus einem Polymer, ein pigmentiertes/farbiges Teilchen, ein farbloses Teilchen, ein lichtdurchlässiges/transparentes Teilchen, ein fluoreszierendes Teilchen oder auch ein phosphoreszierendes Teilchen umfasst.

12. Verfahren nach einem der vorhergehenden Ansprüche, **dadurch gekennzeichnet, dass** das Material mindestens ein Teilchen vom Typ Nanoteilchen oder Mikroteilchen umfasst.

13. Verfahren nach einem der vorhergehenden Ansprüche, **dadurch gekennzeichnet, dass** das Funktionselement (2), das auf die Oberfläche (5) der Aufnahmezone (3) der Uhrkomponente (1) der Uhr (100) auftragen ist, ein dekoratives/ästhetisches Element, ein Element zum Einstellen des Betriebs einer Uhrkomponente, wie beispielsweise eine Trägheitsmasse, oder ein Schnittstellenelement umfasst.

14. Verfahren nach einem der vorhergehenden Ansprüche, **dadurch gekennzeichnet, dass** es ferner einen Schritt des Wiederholens (39) des Schritts des Aufbringens (34) umfasst.

15. Verfahren nach einem der vorhergehenden Ansprüche, **dadurch gekennzeichnet, dass** es ein Verfahren zum Drucken, insbesondere durch einen Aerosol-Strahl, eines Funktionselements (2) auf der Oberfläche (5) einer Aufnahmezone (3) der Komponente (1) der Uhr (100) ist, das zum Einstellen des Gangs der Uhr (100), insbesondere durch die Modifikation der Trägheit und/oder der Unwucht der Komponente (1), beiträgt.

**Claims**

1. Method for printing a functional element (2) on a surface (5) of a receiving area (3) of a timepiece component (1) of a timepiece (100), contributing to setting the rate of this timepiece (100), in particular by modifying the inertia and/or the unbalance of this component (1), said method comprising the following steps of:

   - preparing (20) a solution containing a material constituting said functional element (2), said preparation step (20) comprising a sub-step (21) of defining specific properties of the solution as a function of preparation criteria, said properties concerning a viscosity and a surface tension of this solution and the preparation criteria comprising:

     • structural modification features of the timepiece component (1);
     • construction features of the functional element (2) on said receiving area (3), said features including geometric dimensions, and mechanical, chemical, and aesthetic properties of the functional element to be constructed,
     • structural features of the material to be applied to the receiving area, these features comprising aesthetic, physical, and chemical properties, comprising the density of said material, and
     • features of said receiving area (3) of the component (1) comprising geometric dimensions of the surface of the receiving area that can be covered by the functional element, mechanical and chemical properties of the material constituting the area, said properties including adhesion, surface roughness, surface energy, and surface tension properties of the surface of this receiving area,

   - depositing (34) said prepared solution by a projection device onto the surface (5) of the receiving area,

said definition sub-step (21) comprising a phase (29) of generating specific properties of the solution from preparation criteria estimated during the determination phase (22, 25, 26, 27, 28):

- structural modification features of the timepiece component (1);
- construction features of the functional element (2) on said receiving area;
- structural features of the material to be applied to said receiving area (3);
- features of said receiving area (3) of the component (1); and
- features relating to the printing technology implemented in this method,

printing method wherein, during this generation phase (29):

- the viscosity property of the solution is determined from these preparation criteria, and is sufficiently large to avoid the spreading or even bursting of drops resulting from a projection of the solution beyond the receiving area (3) targeted by the printing of this solution, this viscosity property being established in consideration of the size of the receiving area (3) and also in consideration of aesthetic criteria relating to the final appearance of the functional element (2), and
- the surface tension property of this solution is adjusted in correspondence with the surface energy in the receiving area (3) of this timepiece component, this surface tension of the solution being lower than the surface energy in the receiving area (3).

2. Method according to the preceding claim, **characterised in that** the preparation step (20) comprises a sub-step (30) of composing a mixture relative to said solution as a function of the defined specific properties of this solution, said sub-step (30) comprising a phase (31) of producing a base preparation containing said material and a base liquid, in particular a solvent.

3. Method according to the preceding claim, **characterised in that** said composition sub-step (30) includes a phase (32) of selecting at least one product to be added to said base preparation, said at least one product being chosen from:

- surface tension correction additives such as wetting agents, and/or
- dispersing agents contributing to the stability of the dispersion of the particles of the solid material.

4. Method according to any one of claims 2 and 3, **characterised in that** the step (20) of preparing the solution comprises a sub-step (33) of mixing at least one selected product with the base preparation.

5. Method according to any one of the preceding claims, **characterised in that** the deposition step (34) comprises a sub-step (35) of applying the prepared solution to the entire surface (5) of the receiving area (3).

6. Method according to the preceding claim, **characterised in that** the application sub-step (35) is carried out using printing technology of the "aerosol jet", "high density ink jet", "pneumatic dispensing", "extrusion dispensing" or "super ink jet" type.

7. Method according to any one of claims 5 and 6, **characterised in that** the application sub-step (35) comprises a phase (36) of transforming the prepared solution into an aerosol when the printing technology uses an aerosol jet.

8. Method according to any one of the preceding claims, **characterised in that** the deposition step (34) comprises a sub-step (38) of solidifying the material of the solution applied to the surface of the receiving area (3).

9. Method according to the preceding claim, **characterised in that** the solidification sub-step (38) starts at the same time or substantially at the same time as the application sub-step (35) and ends after this application sub-step (35) has been completed.

10. Method according to any one of the preceding claims, **characterised in that** specific properties of the definition sub-step (21) also concern a density of said solution.

11. Method according to any one of the preceding claims, **characterised in that** the material comprises at least one molecular precursor or at least one particle such as a metal or metal oxide particle, a monocrystalline or polycrystalline particle, an amorphous material particle, a ceramic particle, a polymer particle, a pigmented/coloured particle, a colourless particle, a translucent/transparent particle, a fluorescent particle or a phosphorescent particle.

12. Method according to any one of the preceding claims, **characterised in that** the material comprises at least one particle of the nanoparticle or microparticle type.

13. Method according to any one of the preceding claims, **characterised in that** the functional element (2) applied to the surface (5) of the receiving area (3) of the timepiece component (1) of the timepiece (100) comprises a decorative/aesthetic element, an element for regulating the operation of a timepiece component such as an inertial mass or an interfacing element.

14. Method according to any one of the preceding claims, **characterised in that** it comprises a step (39) of reiterating the deposition step (34).

15. Method according to any one of the preceding claims, **characterised in that** it is a method for printing, in particular by aerosol jet, a functional element (2) on the surface (5) of a receiving area (3) of the component (1) of the timepiece (100) contributing to regulating the rate of this timepiece (100), in particular by modifying the inertia and/or the unbalance of this component (1).

Fig. 1

Fig. 2

Fig. 3

Fig. 4

# Fig. 5

# Fig. 6

# Fig. 7

**EP 4 264 378 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 2016203063 A1
- WO 2012007460 A
- EP 2864844 A1